(19) Europäisches Patentamt
European Patent Office
Office européen des brevets

(11) EP 2 031 000 B1

(12) # FASCICULE DE BREVET EUROPEEN

(45) Date de publication et mention de la délivrance du brevet:
**25.11.2009 Bulletin 2009/48**

(51) Int Cl.:
***C08F 285/00*** *(2006.01)* ***G02B 1/04*** *(2006.01)*

(21) Numéro de dépôt: **08162414.0**

(22) Date de dépôt: **14.08.2008**

(54) **Procédé de préparation d'un materiau transparent de type alliage de polymère thermodurcissable / polymère thermoplastique et son application dans l'optique pour la fabrication de verres organiques**

Herstellungsverfahren eines transparenten Materials vom Typ Legierung aus duroplastischem Polymer / thermoplastischem Polymer und seine Anwendung in der Optik für die Herstellung von organischen Gläsern

Preparation method for a thermosetting polymer / thermoplastic polymer alloy type transparent material and its application in optics for the production of organic glasses

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **29.08.2007 FR 0706056**

(43) Date de publication de la demande:
**04.03.2009 Bulletin 2009/10**

(73) Titulaire: **Essilor International (Compagnie Générale D'Optique)
94220 Charenton le Pont (FR)**

(72) Inventeurs:
- **Berit-Debat, Fabien
c/o ESSILOR INTERNATIONAL
94220, CHARENTON LE PONT (FR)**
- **Lesartre, Noémie
c/o ESSILOR INTERNATIONAL
94220, CHARENTON LE PONT (FR)**

(74) Mandataire: **Cabinet Plasseraud
52, rue de la Victoire
75440 Paris Cedex 09 (FR)**

(56) Documents cités:
**EP-A- 0 819 714
WO-A-01/92415
WO-A-02/08355
WO-A-97/47671
WO-A-99/07757**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne un mélange liquide polymérisable d'un matériau polymère thermodurci particulier et d'un matériau polymère thermoplastique particulier modifiant les propriétés mécaniques et/ou optiques du matériau polymère thermodurci, le matériau polymère thermodurci constituant généralement la phase majoritaire du mélange liquide polymérisable, ainsi qu'un procédé de moulage par coulée dudit alliage permettant d'obtenir un article transparent. L'invention concerne en outre un article transparent obtenu par ce procédé, plus particulièrement une lentille ophtalmique.

Il existe deux types de substrats généralement utilisés pour la fabrication d'articles d'optique, par exemple des lentilles ophtalmiques, à savoir les substrats en verre minéral et les substrats en verre organique. Actuellement, le marché tend à se développer très largement en faveur des verres organiques qui présentent deux avantages majeurs par rapport aux verres minéraux : leur bonne résistance aux chocs et leur légèreté. Les substrats en verre organique les plus utilisés sont le polycarbonate de bisphénol A et celui obtenu par polymérisation du bis(allyl carbonate) de diéthylèneglycol, vendu sous la dénomination commerciale CR 39® par la société PPG INDUSTRIES (lentille ORMA® ESSILOR),

Bien qu'il existe déjà un certain nombre de substrats organiques transparents connus généralement satisfaisants, il est toujours souhaitable de disposer d'autres types de compositions polymérisables permettant d'obtenir de nouveaux substrats transparents, conduisant à des articles d'optique combinant des propriétés intéressantes telles qu'une bonne résistance aux chocs, à la propagation des fissures et aux solvants.

Il est connu qu'un monomère diméthacrylique particulier, à savoir le diméthacrylate de 4,4'-di(éthoxyéthyl)-bisphénol A de formule (I)

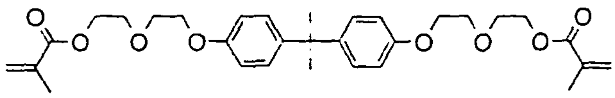

(I)

donne, après polymérisation/réticulation, un matériau transparent dont il serait intéressant d'améliorer la résistance aux chocs et la résistance à la propagation de fissures. La présente invention a ainsi pour but d'améliorer les propriétés mécaniques, en particulier la résistance aux chocs et la résistance à la propagation des fissures, sans perte du module d'élasticité, d'un tel système poly(méth)acrylique thermodurci sans toutefois réduire de manière significative la transparence de celui-ci.

Il est connu d'incorporer des copolymères thermoplastiques, et notamment des copolymères thermoplastiques séquencés, en faibles quantités dans des systèmes polymères thermodurcissables afin d'améliorer les propriétés mécaniques de ceux-ci.

Dans le domaine des verres organiques transparents, on peut mentionner les exemples suivants d'incorporation de polymères séquencés dans des systèmes thermodurcissables :

> Notamment, l'incorporation de copolymères triblocs de type styrène-(1,4-butadiène)-méthacrylate de méthyle (copolymères SBM de type ABC) de la société Arkema dans des matrices thermodurcissables époxy a donné lieu à des études récentes et a conduit à des résultats spectaculaires en terme d'amélioration des propriétés mécaniques des matériaux qui conservent, de plus, leur transparence et ne subissent qu'une faible chute du module d'élasticité. Ces travaux sont décrits, par exemple, dans l'article "A new class of Epoxy Thermosets", Girard-Reydet, E.; Pascault, J. P.; Bonnet, A.; Court, F.; Leibler, L. Macromol. Symp. 2003, 198, 309-322, et dans la demande de brevet EP 1290088, qui décrit plus particulièrement les copolymères à blocs.

Lors des essais d'amélioration des propriétés mécaniques d'un système polymère thermodurcissable à base de diméthacrylate de 4,4'-di(éthoxyéthyl)-bisphénol A (formule (I) ci-dessus) par incorporation de copolymères thermoplastiques triblocs polystyrène-*bloc*-polybutadiène-*bloc*-poly(méthacrylate de méthyle), la Demanderesse a été confrontée au problème d'une démixtion de la phase thermoplastique au cours de l'étape de réticulation du matériau thermodurcissable. Le copolymère thermoplastique, initialement soluble dans le monomère thermodurcissable, devient progressivement incompatible avec le système au fur et à mesure qu'un réseau tridimensionnel fortement réticulé se forme. Le copolymère ainsi « expulsé » du système en cours de durcissement se retrouve dans le matériau final sous forme de microdomaines dispersés dans la matrice thermodurcie, microdomaines qui, lorsqu'ils dépassent une certaine taille, sont visibles à l'oeil nu et se traduisent par une diminution plus ou moins importante de la transparence du matériau qui interdit son utilisation pour la fabrication d'articles optiques.

La Demanderesse a réussi à résoudre ce problème et à obtenir des alliages de polymères transparents à base

de diméthacrylate de 4,4'-di(éthoxyéthyl)-bisphénol A, et de copolymères triblocs, en ajoutant au monomère diméthacrylique une faible quantité d'un comonomère acrylique monofonctionnel ou multifonctionnel, celui-ci étant préférentiellement choisi parmi le méthacrylate de méthyle et le méthacrylate d'hydroxyéthyle ou un mélange de ceux-ci.

Ainsi, lorsqu'on dissout un copolymère thermoplastique tribloc de type polystyrène-*bloc*-polybutadiène-*bloc*-poly(méthacrylate de méthyle) dans du diméthacrylate de 4,4'-di(éthoxyéthyl)-bisphénol A mélangé avec une quantité relativement peu importante d'un des comonomères acryliques monofonctionnels ou multifonctionnel, et que l'on soumet ce système homogène à une polymérisation, la démixtion du copolymère thermoplastique est fortement réduite et le matériau final thermodurci est composé d'une matrice thermodurcie dans laquelle sont dispersés des nanodomaines de polymère thermoplastique, autrement dit des domaines nanométriques invisibles à l'oeil et qui n'altèrent pas la transparence du matériau.

La présente invention a par conséquent pour objet un procédé de préparation d'un article moulé transparent comprenant un alliage d'un matériau polymère thermodurci formant la matrice dudit article, et d'un matériau polymère thermoplastique, dispersé au sein dudit matériau polymère thermodurci, ledit procédé comprenant au moins les étapes suivantes :

i) préparation d'un mélange polymérisable liquide par dissolution dudit matériau polymère thermoplastique dans une composition thermodurcissable précurseur de ladite matrice,
ii) remplissage d'un moule avec le mélange polymérisable liquide préparé à l'étape i),
iii) polymérisation du mélange polymérisable liquide jusqu'à obtention d'un alliage de polymères durci, et
iv) démoulage de l'article moulé formé par ledit alliage de polymères, ledit procédé étant caractérisé par le fait que la composition thermodurcissable comprend au moins 60 % en poids, de préférence entre 70 et 85 % en poids de diméthacrylate de 4,4'-di(éthoxyéthyl)-bisphénol A de formule (I)

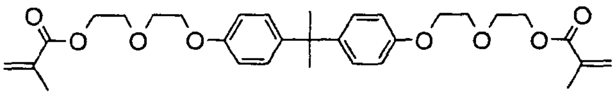
(I)

et au moins 12 % en poids, de préférence de 15 % à 30 % en poids, d'au moins un comonomère acrylique monofonctionnel ou multifonctionnel et par le fait que le matériau polymère thermoplastique comprend au moins un copolymère triblocs polystyrène-*bloc*-polybutadiène-*bloc*-poly(méthacrylate de méthyle) (PS-*b*-PB-*b*-PMMA).

Le comonomère acrylique monofonctionnel est choisi parmi l'isobornyl acrylate (IBOA), le tétrahydrofurfuryl acrylate (THFA), le lauryl acrylate et le 2-phénoxyéthyl acrylate (PEA), le methacrylate de méthyle (MMA) et le méthacrylate d'hydroxyéthyle (HEMA).

Dans le cas d'un comonomère acrylique multifonctionnel celui-ci est choisi parmi les comonomères acryliques difonctionnels tels que le 1,6-hexanediol diacrylate (HDDA), le tricyclodécanediméthanol diacrylate (TCDDMDA), le diéthylèneglycol diacrylate (DEGDA), le polyéthylèneglycol diacrylate, le tétraéthylèneglycol diacrylate, le triéthylèneglycol diacrylate, le tripropylèneglycol diacrylate, le polyéthylèneglycol diacrylate, le dipropylèneglycol diacrylate, l'hexanediol alkoxylé diacrylate, l'esterdiol diacrylate, le polypropylèneglycol diacrylate et le néopentyl glycol propoxylé diacrylate, ou les comonomères acrylates multifonctionnels choisis parmi le triméthylolpropane ethoxylé triacrylate (TMPEOTA), le pentaérythritol tétraacrylate (PETTA), le triméthylolpropane triacrylate (TMPTA), ditriméthylolpropane tétraacrylate (Di-TMPTTA), le tris(2-hydroxyéthyl)isocyanurate triacrylate (THEICTA), le dipentaérythritol pentaacrylate (DiPEPA), le pentaérythritol triacrylate, le trimethylolpropane propoxylé-3 triacrylate (TMPPOTA), le pentaérythritol éthoxyle-4 tetraacrylate (PPTTA), le pentaérythritol ethoxylé-5 triacrylate, le pentaerythritol ethoxylé-5 tétraacrylate, et le glycerol propoxylé triacrylate (GPTA).

D'une façon avantageuse, on utilise de préférence un comonomère acrylate monofonctionnel, et plus particulièrement un comonomère choisi parmi le methacrylate de méthyle (MMA) et le méthacrylate d'hydroxyéthyle (HEMA), ou un mélange de ceux-ci.

Un alliage de polymères, au sens où ce terme est utilisé dans la présente invention, désigne un mélange d'au moins un polymère thermoplastique avec au moins un polymère thermodurcissable.

L'adjectif « thermodurcissable » ou « thermodurci » tel qu'il est utilisé dans la présente demande ne désigne pas forcément un système durcissable ou durci par application de chaleur. En effet, le durcissement peut se faire à température ambiante, voire même à une température inférieure à la température ambiante, par exemple dans le cas d'une photopolymérisation. Ce terme est utilisé dans la présente demande, comme dans le domaine des matières plastiques en général, par opposition au terme de « thermoplastique ». Autrement dit, un polymère thermodurci est un matériau dur, formé par un réseau macromoléculaire tridimensionnel réticulé, qui ne se fluidifie pas à température élevée.

Comme indiqué ci-dessus, l'article moulé transparent préparé par le procédé de l'invention est constitué d'un

alliage de polymères. Il comprend un premier matériau polymère thermodurci formant la matrice de l'article fini, thermodurci et, dispersé sous forme de nano-domaines au sein de ladite matrice de polymère durci, une seconde phase polymère thermoplastique formée par le copolymère triblocs. La phase thermodurcie formée par le premier matériau est généralement la phase majoritaire.

L'article moulé transparent est préparé, selon l'invention, par polymérisation d'un mélange polymérisable liquide, comportant une composition polymérisable thermodurcissable (précurseur de la matrice thermodurcie) dans laquelle est dissous le polymère thermoplastique triblocs, le durcissement de ladite composition polymérisable thermodurcissable formant le premier matériau thermodurci.

La composition thermodurcissable représente de préférence de 80 à 97 % en poids, en particulier de 90 à 95 % en poids de la masse du mélange liquide polymérisable. Le matériau polymère thermoplastique représente de préférence de 3 à 20 % en poids, en particulier de 5 à 10 % en poids du mélange liquide polymérisable.

La polymérisation du mélange polymérisable selon l'invention peut être de type radicalaire, anionique, cationique ou s'effectuer par métathèse par ouverture de cycle en présence de cyclo-oléfines, techniques bien connues de l'homme du métier. Dans le cas où le mélange polymérisable selon l'invention contient des monomères polymérisables porteurs de groupes éthyléniques, l'amorçage de la polymérisation et la polymérisation sont généralement effectuées sous irradiation. Il peut s'agir d'une photo-polymérisation, éventuellement en présence d'un amorceur de polymérisation, ou bien d'une irradiation au moyen d'un faisceau d'électrons (*electron beam irradiation*), un type de polymérisation qui ne nécessite pas la présence d'un amorceur de polymérisation puisque l'énergie du faisceau d'électrons est suffisante pour créer les radicaux libres nécessaires à la polymérisation. Le mélange polymérisable selon l'invention peut également être polymérisé en utilisant une combinaison de ces méthodes. De préférence, la composition polymérisable thermodurcissable de l'invention comprend au moins un amorceur de polymérisation, de préférence au moins un photo-amorceur.

Selon un mode de réalisation particulièrement préféré, la composition polymérisable thermodurcissable de l'invention est polymérisée par photopolymérisation et comprend au moins un photo-amorceur celui-ci représentant préférentiellement de 0,1% à 10% de la masse de la composition polymérisable thermodurcissable.

Parmi les photo-amorceurs utilisables aux fins de l'invention dans la composition polymérisable thermodurcissable, on peut citer, sans limitation, les $\alpha$-hydroxy-cétones aromatiques, les $\alpha$-amino-cétones, les benzophénones, les acétophénones, les benzyldiméthylcétals, les oxydes de monoacylphosphine (MAPO), les oxydes de bisacylphosphine (BAPO), les mélanges amine tertiaire / dicétone, les alkylbenzoyléthers, les éthers de benzoïne, les glyoxylates de phényle, les thioxanthones et des photo-amorceurs cationiques tels que les sels de triaryl sulfonium et les sels d'aryliodonium.

On peut citer en particulier les photo-amorceurs commercialisés par la société Ciba Specialty Chemicals sous la dénomination générale IRGACURE®, notamment le photo-amorceur IRGACURE® 184 (1-hydroxycyclohexyl-phénylcétone), le photo-amorceur IRGACURE® 500 qui est un mélange 50/50 en masse de 1-hydroxycyclohexyl-phénylcétone et de benzophénone, le photo-amorceur IRGACURE® 651 (2,2-diméthoxy-2-phényl-acétophénone), le photo-amorceur IRGACURE® 819 (oxyde de bis(2,4,6-triméthylbenzoyl)-phénylphosphine), le photo-amorceur IRGACURE® 907 (2-méthyl-1-[4-(méthylthio)-phényl]-2-morpholino-propan-1-one), le photo-amorceur IRGACURE® 1700 (mélange 25/75 en masse d'oxyde de bis(2,6-diméthoxybenzoyl)-2,4-4-triméthylpentyl-phosphine et de DAROCUR® 1173), les photo-amorceurs commercialisés par la société Ciba Specialty Chemicals sous la dénomination générale DAROCUR®, notamment le photo-amorceur DAROCUR® 1173 (2-hydroxy-2-méthyl-1-phényl-propan-1-one), le photo-amorceur DAROCUR® TPO (oxyde de 2,4,6-triméthylbenzoyl-diphénylphosphine), le photo-amorceur DAROCUR® 4265 (mélange 50/50 en masse de DAROCUR® 1173 et de DAROCUR® TPO), le photo-amorceur commercialisé par la société Ciba Specialty Chemicals sous la dénomination CGI 1850, qui est un mélange 50/50 en masse de IRGACURE® 184 et d'oxyde de bis(2,6-diméthoxybenzoyl)-2,4-4-triméthylpentyl-phosphine, les photo-amorceurs commercialisés par la société BASF sous la dénomination générale Lucirin®, notamment le photo-amorceur Lucirin® TPO-L (2,4,6-triméthylbenzoylphénylphosphinate d'éthyle), l'oxyde de bis(2,6-diméthoxybenzoyl)-2,4-4-triméthylpentyl-phosphine, la benzophénone, la 2,4,6-triméthylbenzophénone, la 4-méthylbenzophénone, la 2,2-diméthoxy-2-phényl-acétophénone, la 2,2-diéthoxy-acétophénone (DEAP, commercialisée par Upjohn), la 4-(2-hydroxyéthoxy)phényl-(2-hydroxy-2-méthylpropyl) cétone, la 2-benzyl-2-*N*,*N*-diméthylamino-1-(4-morpholinophényl)-butan-1-one.

Le photo-amorceur préféré est le CGI 1850, répondant à la formule (IV) :

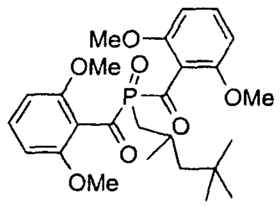 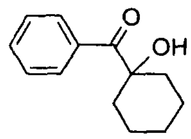 (IV)

La réaction de polymérisation est amorcée en utilisant un moyen approprié, à savoir la lumière visible, un rayonnement UV ou tout autre moyen, le choix dépendant du type de photo-amorceur utilisé.

Les amorceurs de polymérisation peuvent être utilisés seuls ou en mélange avec des agents de modification de durcissement tels que, par exemple, des photo-sensibilisateurs, des accélérateurs (catalyseurs) ou des inhibiteurs de polymérisation, dans des proportions classiques. Certains photo-amorceurs peuvent également avoir des propriétés de photo-sensibilisation.

Des exemples non limitatifs de photo-sensibilisateurs et d'accélérateurs utilisables dans la présente invention sont des thioxanthones telles que l'ITX (2- ou 4-isopropyl-thioxanthone) ou les chlorothioxanthones telles que la CPTX (1-chloro-4-propoxythioxanthone), des quinones telles que la camphroquinone, des benzanthrones, la cétone de Michler (4,4'-bis(diméthylamino)-benzophénone), la fluorénone, la triphényl acétophénone, la diméthyl-éthanolamine, la méthyldiéthanolamine, la triéthanolamine, la DMPT (*N,N*-diméthyl-para-toluidine), la MHPT (*N*-[2-hydroxyéthyl]-*N*-méthyl-para-toluidine), l'ODAB (para-*N,N*-diméthylamino benzoate d'octyle), l'EDAB (para-*N,N*-diméthylamino-benzoate d'éthyle, commercialisé par Aceto Corporation sous le nom Quantacure® EPD), l'EDMA (2-éthyl-9,10-diméthoxyanthracène ou leurs mélanges. En particulier, un mélange camphroquinone / EDAB peut être employé.

Des exemples non limitatifs d'inhibiteurs de polymérisation (inhibiteurs de radicaux libres) utilisables dans la présente invention sont le sel d'ammonium de la *N*-nitroso-*N*-phénylhydroxylamine, le sel d'aluminium de la tris[*N*-nitroso-*N*-phénylhydroxylamine, le 4-méthoxyphénol (MEHQ), l'hydroquinone et les hydroquinones substitutées, le pyrogallol, la phénothiazine, le 4-éthyl-catéchol, les amines stériquement encombrées et leurs mélanges.

La composition polymérisable thermodurcissable selon l'invention peut également comporter un certain nombre d'autres additifs classiquement utilisés dans les compositions polymérisables pour articles d'optique, en particulier les lentilles ophtalmiques, dans des proportions classiques. Des exemples d'additifs sont, sans limitation, des colorants, des stabilisants tels que des absorbeurs d'UV, des antioxydants et des agents anti-jaunissement, des parfums, des déodorants, des agents de démoulage, des lubrifiants, des promoteurs d'adhésion et des agents de couplage.

Parmi les absorbeurs d'UV (systèmes filtrant les radiations UV) utilisables aux fins de l'invention dans la composition polymérisable thermodurcissable, on peut citer, sans limitation, l'acide 4-aminobenzoïque (PABA) et ses sels, l'acide anthranilique et ses sels, l'acide salicylique et ses sels ou ses esters, notamment les hydroxybenzoates d'aryle, l'acide 4-hydroxycinnamique et ses sels, les dérivés sulfoniques de benzoxazoles, benzimidazoles et benzothiazoles et leurs sels, les benzophénones, notamment les dérivés sulfoniques de benzophénones et les 2-hydroxybenzophénones et leurs sels, les dérivés sulfoniques de benzylidène camphre et leurs sels, les dérivés de benzylidène camphre substitués par un groupe ammonium quaternaire et leurs sels, les dérivés phtalylidène de l'acide camphrosulfonique et leurs sels, les benzotriazoles, notamment les dérivés sulfoniques du benzotriazole et leurs sels, les oxalamides, les oxanilides, et leurs mélanges.

Des exemples non limitatifs d'absorbeurs d'UV utilisables dans la présente invention sont le 2-(2-hydroxyphényl)-2H-benzotriazole, le PBSA (sel de sodium de l'acide 2-phényl-benzimidazole-5-sulfonique, commercialisé sous le nom PARSOL® HS par Givaudan-Roure), le 4-*tert*-butyl-4'-méthoxy-dibenzoylméthane (commercialisé sous le nom PARSOL® 1789 par Givaudan-Roure), le *p*-méthoxycinnamate de 2-éthylhexyle ou avobenzone (commercialisé sous le nom PARSOL® MCX par Givaudan-Roure), le *p*-méthoxycinnamate d'octyle, l'UVINUL® MS 40 (acide 2-hydroxy-4-méthoxybenzophénone-5-sulfonique, BASF), l'UVINUL® M 40 (2-hydroxy-4-méthoxybenzophénone, BASF), l'octocrylène (2-cyano-3,3-diphénylacrylate de 2-éthylhexyle), le 4-diméthylaminobenzoate de 2-éthylhexyle (octyl diméthyl-PABA), le salicylate de triéthanolamine, le salicylate d'octyle. Il est également possible d'utiliser des polymères ayant des propriétés de photo-protection UV, notamment les polymères comprenant des groupes benzylidène-camphre et/ou benzotriazole, substitués par des groupes sulfo ou ammonium quaternaire. Ils peuvent être utilisés seuls ou en mélange avec d'autres absorbeurs d'UV.

Les agents anti-jaunissement tels que ceux décrits dans les brevets US 5442022, US 5445828, US 5702825, US 5741831 et FR 2699541 peuvent être utilisés, sans limitation, seuls ou en mélange. L'agent anti-jaunissement préféré est le 3-méthyl-but-2-èn-1-ol (M-BOL). En général, la masse des agents anti-jaunissement représente de 0,5 à 4 % de la masse de la composition polymérisable thermodurcissable selon l'invention.

Parmi les antioxydants utilisables aux fins de l'invention dans la composition polymérisable thermodurcissable, on peut citer, sans limitation, les antioxydants phénoliques, stériquement encombrés, l'IRGANOX® 245 DW (éthylènebis(oxyéthylène)bis-(3-(5-*tert*-butyl-4-hydroxy-*m*-tolyl)propionate) commercialisé par la société Ciba Specialty Chemicals.

Les polymères à blocs de la présente l'invention sont des copolymères triséquencés, également appelés copolymères triblocs, polystyrène-*bloc*-polybutadiène-*bloc*-poly(méthacrylate de méthyle) (PS-*b*-PB-*b*-PMMA), appelés ci-après copolymères SBM.

Les copolymères à blocs utilisables dans le cadre de l'invention sont notamment décrits dans les demandes de brevet WO 2005/073314 et WO 2005/014699. On se référera particulièrement à ces documents pour une description détaillée des parties PS, PB et PMMA de ces copolymères à blocs.

Enfin, il est important pour l'obtention d'un article moulé transparent comprenant un alliage de polymères, par le procédé de l'invention, que le bloc poly(méthacrylate de méthyle) (PMMA) du polymère à blocs représente une fraction relativement importante du copolymère à blocs. Selon une variante avantageuse de l'invention, le bloc de PMMA représente de préférence de 50 % à 80 % en poids, plus préférentiellement de 52 % à 70 % en poids, de la masse moléculaire moyenne en poids du copolymère à blocs polystyrène-bloc-polybutadiène-bloc-poly(méthacrylate de méthyle).

Ainsi, pour un copolymère triséquencé SBM présentant une masse molaire moyenne en poids comprise entre 15 000 et 200 000 g/mol, la masse moléculaire moyenne en poids du bloc poly(méthacrylate de méthyle) est de préférence comprise entre 10 000 et 100 000 g/mol,

Dans le cadre de l'invention il est entendu que les copolymères à blocs utilisés peuvent être un mélange de copolymères triblocs et de copolymères diblocs de type polystyrène-*bloc*-polybutadiène.

Le procédé de l'invention comprend au moins quatre étapes. La première étape consiste à préparer un mélange polymérisable par dissolution du polymère thermoplastique triblocs dans la composition polymérisable thermodurcissable. Le polymère thermoplastique est utilisé de préférence sous forme de poudre ou de granules. Il est généralement ajouté progressivement et sous agitation à la composition polymérisable thermodurcissable. Si la dispersion obtenue n'est pas homogène à température ambiante, elle peut être chauffée sous agitation dans un bain d'huile thermostaté jusqu'à ce que le copolymère triblocs soit totalement solubilisé. Par température ambiante, on entend dans la présente invention une température comprise entre 15 et 25 °C. Cette phase de dissolution peut prendre plusieurs semaines à une température de l'ordre de 80 °C. Le mélange polymérisable obtenu, généralement transparent et visqueux, peut être filtré, éventuellement à chaud, puis dégazé sous agitation, éventuellement à chaud, avant de servir à la deuxième étape de moulage par coulée.

Cette deuxième étape consiste à remplir un moule avec le mélange polymérisable ainsi obtenu. De façon optionnelle, ledit mélange polymérisable peut être préchauffé, tout comme le moule. Généralement, une température de l'ordre de 80 - 90 °C convient parfaitement. Le mélange liquide polymérisable peut par exemple être coulé dans un assemblage constitué de deux parties de moule en verre minéral maintenues ensemble par un ruban adhésif en périphérie.

La troisième étape consiste à polymériser le mélange polymérisable liquide jusqu'à obtention d'un alliage de polymères durci, de préférence par photo-polymérisation. Cette polymérisation est réalisée de préférence à une température comprise entre 0 °C et 100 °C, en particulier à une température comprise entre 10 et 30 °C, et idéalement à température ambiante, c'est-à-dire à une température comprise entre 20 et 25 °C, jusqu'à obtention d'un matériau suffisamment dur pour pouvoir être démoulé et qui présente les propriétés mécaniques et optiques recherchées.

On laisse de préférence la polymérisation se dérouler jusqu'à ce que plus de 90 %, de préférence plus de 95 %, des doubles liaisons acryliques initialement présentes dans le mélange initial aient réagi.

Enfin, à la quatrième et dernière étape, on procède au démoulage et à la récupération de l'article moulé.

La présente invention a également pour objet un article moulé transparent comprenant un alliage d'un polymère thermodurci et d'un polymère thermoplastique triblocs, susceptible d'être obtenu par un procédé tel que décrit ci-dessus.

Les articles moulés transparents obtenus selon le procédé de l'invention sont de préférence des articles d'optique, c'est-à-dire des verres organiques. Ils sont destinés, généralement mais non exclusivement, à être utilisés en tant qu'articles d'optique, de préférence en tant que lentilles ophtalmiques. Ils présentent l'avantage de posséder des propriétés mixtes provenant de chacun des deux matériaux, notamment une bonne résistance aux solvants apportée par le matériau thermodurci et une bonne résistance aux chocs et à la propagation de fissures attribuable au matériau polymère thermoplastique dispersé sous forme de nano-domaines dans la matrice thermodurcie.

Pour améliorer d'autres propriétés de tels articles d'optique en verre organique, comme par exemple la résistance à l'abrasion et aux rayures, le caractère anti-réfléchissant et la résistance aux salissures, il est possible de former sur au moins une des faces principales de l'article un ou plusieurs revêtements fonctionnels.

Un inconvénient majeur des verres organiques, moins durs que les verres minéraux, est en effet leur faible résistance aux rayures. Il est ainsi connu de former successivement sur une face principale du substrat un premier revêtement, appelé primaire anti-choc, dont le but est d'accroître la résistance aux chocs de l'article et également l'adhésion au substrat de revêtements ultérieurs puis, sur ce revêtement de primaire anti-choc, un revêtement dur, généralement appelé revêtement anti-abrasion ou anti-rayures, dont le but est d'améliorer la capacité de la surface de l'article d'optique à résister aux endommagements dus à des agressions mécaniques. Vient se superposer au revêtement

anti-abrasion un revêtement anti-reflet, auquel se superpose à son tour un revêtement anti-salissure, dont le rôle est de modifier la tension interfaciale entre la couche anti-reflet et l'eau ou la graisse (afin de diminuer leur adhérence), mais également d'obturer les interstices afin d'empêcher la graisse de s'infiltrer et de subsister.

La présente invention a en outre pour objet le mélange liquide polymérisable de départ servant à la mise en oeuvre du procédé selon la présente invention et conduisant à l'article moulé transparent. Ce mélange liquide polymérisable comprend un matériau polymère thermoplastique, choisi parmi les copolymères triblocs polystyréne-*bloc*-polybutadiéne-*bloc*-poly(méthacrylate de méthyle), dissous dans une composition thermodurcissable, comprenant au moins 60 % en poids, de préférence entre 70 et 85 % en poids de diméthacrylate de 4,4'-di(éthoxyéthoxy)-bisphénol A de formule (I)

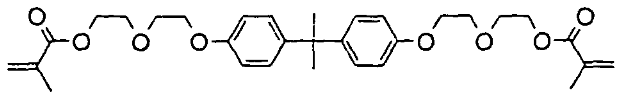

(I)

et au moins 12 % en poids, de préférence de 15 % à 30 % en poids, d'au moins un comonomère acrylique monofonctionnel ou multifonctionnel.

Le comonomère acrylique monofonctionnel est choisi parmi l'isobornyl acrylate (IBOA), le tétrahydrofurfuryl acrylate (THFA), le lauryl acrylate , le 2-phénoxyéthyl acrylate (PEA), le methacrylate de méthyle (MMA) et le méthacrylate d'hydroxyéthyle (HEMA).

Dans le cas d'un comonomère acrylique multifonctionnel celui-ci est choisi parmi les comonomères acryliques difonctionnels tels que le 1,6-hexanediol diacrylate (HDDA), le tricyclodécanediméthanol diacrylate (TCDDMDA), le diéthylèneglycol diacrylate (DEGDA), le polyéthylèneglycol diacrylates, le tétraéthylèneglycol diacrylate, le triéthylèneglycol diacrylate, le tripropylèneglycol diacrylate, le polyéthylèneglycol diacrylate, le dipropylèneglycol diacrylate, l'hexanediol alkoxylé diacrylate, l'esterdiol diacrylate, le polypropylène glycol diacrylate et le néopentyl glycol propoxylé diacrylate, ou les comonomères acrylates multifonctionnels choisis parmi le triméthylolpropane ethoxylé triacrylate (TMPEOTA), le pentaérythritol tétraacrylate (PETTA), le triméthylolpropane triacrylate (TMPTA), ditriméthylolpropane tétraacrylate (Di-TMPTTA), le tris(2-hydroxyéthyl)isocyanurate triacrylate (THEICTA), le dipentaérythritol pentaacrylate (DiPEPA), le pentaérythritol triacrylate, le trimethylolpropane propoxylé-3 triacrylate (TMPPOTA), le pentaérythritol éthoxyle-4 tetraacrylate (PPTTA), le pentaérythritol ethoxylé-5 triacrylate, le pentaerythritol ethoxylé-5 tétraacrylate, et le glycerol propoxylé triacrylate (GPTA).

D'une façon avantageuse selon l'invention, on utilise de façon préférentielle un comonomère acrylate monofonctionnel, et plus particulièrement choisi parmi le methacrylate de méthyle (MMA) et le méthacrylate de d'hydroxyéthyle (HEMA), ou un mélange de ceux-ci.

L'ensemble des préférences spécifiées précédemment concernant en particulier les proportions relatives de la composition thermodurcissable et du matériau polymère thermoplastique, la nature et la quantité de l'amorceur de polymérisation, la nature chimique et la masse moléculaire du polymère thermoplastique s'appliquent bien entendu également au mélange liquide polymérisable.

**Exemple**

Les différentes compositions polymérisables thermodurcissables utilisées sont préparées par mélange d'une "formulation A" de base avec des proportions variables d'un comonomère acrylique monofonctionnel selon l'invention, à savoir le méthacrylate de méthyle (MMA) ou le méthacrylate d'hydroxyéthyle (HEMA).

La formulation A de base est constituée de :

- 98 % en masse d'un diméthacrylate de formule (I),

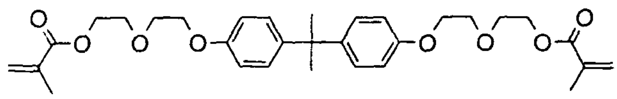

(I)

- 1,8 % en masse de 3-méthyl-but-2-èn-1-ol (M-BOL, agent anti-jaunissement), et
- 0,2 % en masse de CGI 1850 [photo-amorceur de formule (IV)], les % étant exprimés par rapport à la masse totale de la composition polymérisable thermodurcissable,

Le copolymère triblocs utilisé dans cet exemple est un PS-b-PB-b-PMMA de masse molaire moyenne en poids de 41 900 g/mol contenant une fraction massique du bloc PMMA supérieure à 50%.

Le copolymère triblocs est introduit lentement sous forme de poudre dans la composition thermodurcissable (formulation A + méthacrylate de méthyle ou méthacrylate d'hydroxyéthyle ou méthacrylate d'isobutyle) préalablement chauffée à une température de 80 °C. La suspension est maintenue à cette température et sous agitation pendant toute la durée de la phase de dissolution qui dure environ 7 jours.

Le mélange polymérisable obtenu est transparent et visqueux (viscosité : environ 10 Pa.s à température ambiante).

Le mélange liquide polymérisable est ensuite filtré à travers un filtre d'une porosité de 20 microns. Après 2 heures de dégazage du mélange polymérisable filtré, on prélève environ 30 mL de mélange dans une seringue préchauffée pendant environ 30 minutes à 80 °C et on l'injecte dans un assemblage constitué de deux parties de moule en verre minéral maintenues par un ruban adhésif en périphérie, également préchauffé à 80 °C.

Les moules ainsi remplis sont ensuite stockés pendant 10 heures à une température d'environ 20 °C. Après cette période de repos à température ambiante, la polymérisation est amorcée par exposition à un rayonnement ultraviolet. Après une durée d'exposition d'environ 13 minutes on obtient un verre organique transparent suffisamment durci pour pouvoir être démoulé par désassemblage du système de moules. Le taux de conversion des fonctions méthacrylate, déterminée par spectrométrie infrarouge, est supérieur à 95 %.

Transparence des verres organiques :

On prépare de la manière décrite ci-dessus une série de verres organiques thermodurcis contenant une quantité fixe de copolymère thermoplastique triblocs SBM tel que mentionné ci-dessus et des teneurs croissantes des comonomères acryliques monofonctionnels selon la présente invention (MMA et HEMA). La partie complémentaire jusqu'à 100 % est constitué de la formulation A définie ci-dessus.

Le tableau 1 montre l'influence de la quantité du comonomère acrylique sur la transparence des verres organiques obtenus.

Tableau 1

<table>
<tr><th>Pourcentage en poids du comonomère acrylique monofonctionnel</th><th>Méthacrylate d'hydroxyméthyle (HEMA)</th><th>Méthacrylate de méthyle (MMA)</th></tr>
<tr><td>0 %</td><td colspan="2">diffusant</td></tr>
<tr><td>5 %</td><td colspan="2" rowspan="2">diffusant</td></tr>
<tr><td>10 %</td></tr>
<tr><td>15 %</td><td colspan="2" rowspan="3">transparent</td></tr>
<tr><td>20 %</td></tr>
<tr><td>25 %</td></tr>
</table>

La teneur minimale efficace des comonomères MMA et HEMA est supérieure à 10 % en poids.

Ténacité

La ténacité de certaines formulations a été évaluée par fracture en flexion trois points dans des échantillons entaillés.

Mesures de ténacité

Critères de la mécanique de la fracture en élasticité linéaire

La mécanique de la fracture en élasticité linéaire s'applique aux matériaux obéissant à la loi de Hooke (proportionnalité entre contrainte appliquée et déformation) lors d'une sollicitation de l'éprouvette entaillée (mode I, ouverture de la fissure en tension, dans notre étude). Dans ce cadre, la mesure de deux grandeurs interdépendantes permet de caractériser la mécanique de la rupture :

- $G_{Ic}$: énergie de rupture (énergie nécessaire pour initier la propagation de la fissure)
- $K_{Ic}$: ténacité à rupture (résistance du matériau à l'initiation de fissure) avec $G_{Ic} = K_{Ic}^2/E$ en contrainte plane, et $G_{Ic} = K_{Ic}^2 x(1-v^2)/E$ en déformation plane

Protocole expérimental :

Les essais de fracture ont été réalisés en flexion 3 points sur un appareil Instron 4301 (mesures à 20 °C - salle climatisée).

La géométrie des éprouvettes destinées aux essais de fracture est représentée à la figure 1. Les éprouvettes ont été découpées, à partir de palets de 6 mm d'épaisseur, aux dimensions préconisées par Williams dans son protocole (Williams J. G., EGF Task Group on Polymers and Composites, A Linear Elastic Fracture Mechanics (LEFM) standard for determining Kc and Gc for plastics (1989)). Dans un premier temps, les éprouvettes ont été pré-entaillées à l'aide d'une fraise d'épaisseur 0,5 mm, puis recuites à 120 °C pendant 2 heures. Enfin, une entaille aigüe a été réalisée à la lame de rasoir en fond de pré-entaille, grâce à un système de guillotine.

Les critères relatifs à la géométrie des éprouvettes et à l'entaillage doivent être respectés strictement, afin de tester l'échantillon dans des conditions de fragilité maximum et de pouvoir appliquer les formules donnant accès à $K_{Ic}$ et $G_{Ic}$.

Dans notre cas, en référence à la figure 1, B=6 mm, W=12 mm.

Calcul des grandeurs de rupture

$K_{Ic}$ est déterminé expérimentalement à partir de la formule suivante :

$$K_{Ic} = f(\alpha)x(P_{max}/ BW^{1/2})$$

où B et W sont respectivement l'épaisseur et la hauteur de l'échantillon.
a est la profondeur de l'entaille (entaille + pré-entaille).
$P_{max}$ est la force maximale enregistrée durant l'essai de rupture. $\alpha = a/W$
f, pour un échantillon de cette géométrie, est un facteur géométrique égal à :

$$f(\alpha) = 6\alpha^{1/2}\frac{1,99-\alpha(1-\alpha)(2,15-3,93\alpha+2.7\alpha^2)}{(1-2\alpha)(1-\alpha)^{3/2}}$$

$G_{Ic}$ est déterminé expérimentalement par :

$$G_{Ic} = \frac{U_i}{BW\Phi(\alpha)}$$

où $U_i$ est l'aire sous la courbe force-déplacement jusqu'à $P_{max}$ et
$\Phi$ est un facteur géométrique :

$$\Phi(\alpha) = \frac{\Theta + 18,64}{\frac{d\Theta}{d\alpha}}$$

avec :

$$\Theta(\alpha) = \frac{16\alpha^2}{(1-\alpha)^2}(8{,}9 - 33{,}717\alpha + 79{,}616\alpha^2 - 112{,}952\alpha^3 + 84{,}815\alpha^4 - 25{,}672\alpha^5)$$

$$\frac{d\Theta}{d\alpha}(\alpha) = \frac{16\alpha^2}{(1-\alpha)^2}(-33{,}717 + 159{,}2326\alpha^2 - 338{,}856\alpha^2 + 339{,}26\alpha^3 - 128{,}36\alpha^4) +$$

$$\frac{32\alpha}{(1-\alpha)^3}(8{,}9 - 33{,}717\alpha + 79{,}616\alpha^2 - 112{,}952\alpha^3 + 84{,}815\alpha^4 - 25{,}672\alpha^5)$$

Le tableau 2 montre le facteur critique d'intensité $K_{IC}$ (exprimé en MPa.m$^{1/2}$), l'énergie de rupture $G_{Ic}$ (KJ/m$^2$) et le module d'élasticité E (MPa) de cinq échantillons de verres organiques, tous parfaitement transparents.

Tableau 2

| | $K_{IC}$ (MPa.m$^{1/2}$) | G1c (kJ/m$^2$) | E en flexion (MPa) |
|---|---|---|---|
| Formulation A (100 %) | 0,67 $\pm$ 0,01 | 0,21 $\pm$ 0,01 | 2382 |
| Formulation A / HEMA (78% / 22%) | 0,64 $\pm$ 0,04 | 0,21 $\pm$ 0,02 | 3100 |
| Formulation A / HEMA / SBM (67,5%/25%/7,5%) | 1,08 $\pm$ 0,02 | 0,74 $\pm$ 0,01 | 2807 |
| Formulation A / MMA (78% / 22%) | 0,61 $\pm$ 0,03 | 0,19 $\pm$ 0,01 | 2434 |
| Formulation A / MMA / SBM (67,5%/25%/7,5%) | 1,29 $\pm$ 0,02 | 1,02 $\pm$ 0,02 | 2854 |

Les résultats mettent en évidence l'efficacité de la présence combinée de copolymères triblocs SBM et de comonomère acrylique dans le renforcement des propriétés mécaniques de la formulation A. En particulier ils montrent une augmentation du taux de restitution d'énergie $G_{IC}$ (0,74 et 1,02) par rapport à la formulation A pure ou en présence uniquement d'un comonomère acrylique. Le module d'élasticité est également renforcé.

## Revendications

**1.** Procédé de préparation d'un article moulé transparent comprenant un alliage d'un matériau polymère thermodurci formant la matrice dudit article, et d'un matériau polymère thermoplastique, dispersé au sein dudit matériau polymère thermodurci, ledit procédé comprenant au moins les étapes suivantes :

i) préparation d'un mélange polymérisable liquide par dissolution dudit matériau polymère thermoplastique dans une composition thermodurcissable précurseur de ladite matrice,
ii) remplissage d'un moule avec le mélange polymérisable liquide préparé à l'étape i),
iii) polymérisation du mélange polymérisable liquide jusqu'à obtention d'un alliage de polymères durci, et
iv) démoulage de l'article moulé formé par ledit alliage de polymères, ledit procédé étant **caractérisé par le fait que** la composition thermodurcissable comprend au moins 60 % en poids, de préférence entre 70 et 85% en poids de diméthacrylate de 4,4'-di(éthoxyéthyl)-bisphénol A de formule (I)

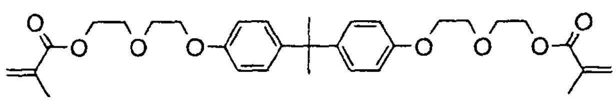 (I)

et au moins 12 % en poids, de préférence de 15 % à 30 % en poids, d'au moins un comonomère acrylique monofonctionnel ou multifonctionnel et **par le fait que** le matériau polymère thermoplastique comprend au moins un copolymère triblocs polystyrène-b/oc-polybutadiène-bloc-poly(méthacrylate de méthyle) (PS-b-PB-b-PMMA).

2. Procédé de préparation d'un article moulé transparent selon la revendication 1, **caractérisé en ce que** le comonomère acrylique est un comonomère acrylique monofonctionnel.

3. Procédé de préparation d'un article moulé transparent selon l'une quelconque des revendications précédentes, **caractérisé en ce que** le comonomère acrylique est choisi parmi le methacrylate de méthyle, le méthacrylate d'hydroxyéthyle, ou un mélange de ceux-ci.

4. Procédé de préparation d'un article moulé transparent selon l'une quelconque des revendications précédentes, **caractérisé en ce que** la composition thermodurcissable représente de 80 à 97 % en poids, de préférence de 90 à 95 % en poids de la masse du mélange liquide polymérisable et **en ce que** le matériau polymère thermoplastique représente de 3 à 20 % en poids, de préférence de 5 à 10 % en poids du mélange liquide polymérisable.

5. Procédé de préparation d'un article moulé transparent selon l'une quelconque des revendications précédentes, **caractérisé en ce que** la composition thermodurcissable comprend en outre au moins un amorceur de polymérisation, de préférence au moins un photo-amorceur.

6. Procédé de préparation d'un article moulé transparent selon la revendication 5, **caractérisé en ce que** la masse du ou des amorceurs de polymérisation représente de 0,1 à 10 % de la masse de la composition polymérisable thermodurcissable.

7. Procédé de préparation d'un article moulé transparent selon l'une quelconque des revendications précédentes, **caractérisé en ce que** le mélange liquide polymérisable est polymérisé par photo-polymérisation.

8. Procédé de préparation d'un article moulé transparent selon l'une quelconque des revendications précédentes, **caractérisé en ce que** la polymérisation à l'étape iii) est réalisée à une température comprise entre 0 °C et 100 °C, de préférence à une température comprise entre 10 et 30 °C, et en particulier à une température comprise entre 20 et 25 °C.

9. Procédé de préparation d'un article moulé transparent selon l'une quelconque des revendications précédentes, **caractérisé en ce que** le bloc de poly(méthacrylate de méthyle) (PMMA) représente de 50% à 80% en poids, de préférence de 52% à 70% en poids de la masse moléculaire moyenne en poids du copolymère triblocs polystyrène-bloc-polybutadiène-bloc-poly(méthacrylate de méthyle).

10. Procédé de préparation d'un article moulé transparent selon l'une quelconque des revendications précédentes, **caractérisé en ce que** la masse moléculaire moyenne en poids dudit bloc poly(methacrylate de méthyle) est comprise entre 10 000 et 100 000 g/mol.

11. Procédé de préparation d'un article moulé transparent selon l'une quelconque des revendications précédentes, **caractérisé en ce que** ledit article moulé transparent est un article d'optique, de préférence une lentille ophtalmique.

12. Article moulé transparent comprenant un alliage d'un polymère thermodurci et d'un polymère thermoplastique triblocs, susceptible d'être obtenu par un procédé selon l'une quelconque des revendications précédentes.

13. Article moulé transparent selon la revendication 12, **caractérisé par le fait qu'**il s'agit d'une lentille ophtalmique.

14. Mélange liquide polymérisable comprenant un matériau polymère thermoplastique dissous dans une composition thermodurcissable, **caractérisé par le fait que** la composition thermodurcissable comprend au moins 60 % en poids, de préférence entre 70 et 85 % en poids en poids de diméthacrylate de 4,4'-di(éthoxyéthoxy)-bisphénol A de formule (I)

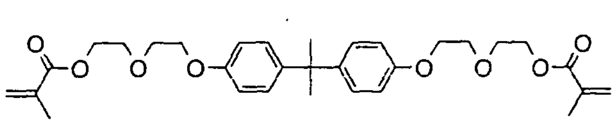

(I)

et au moins 12 % en poids, de préférence de 15 % à 30 % en poids, d'au moins un comonomère acrylique monofonctionnel ou multifonctionnel, et **par le fait que** le matériau polymère thermoplastique comprend au moins un copolymère triblocs poiystyrène-b/oc-polybutadiène-b/oc-poly(méthacrylate de méthyle) (PS-b-PB-b-PMMA).

**15.** Mélange liquide polymérisable selon la revendication 14, **caractérisé en ce que** le comonomère acrylique est un comonomère acrylique monofonctionnel.

**16.** Mélange liquide polymérisable selon la revendication 14 ou 15, **caractérisé en ce que** le comonomère acrylique est choisi parmi le methacrylate de méthyle, le méthacrylate d'hydroxyéthyle, ou un mélange de ceux-ci.

**17.** Mélange liquide polymérisable selon l'une quelconque des revendications 14 à 16, **caractérisé en ce que** la composition thermodurcissable représente de 80 à 97 % en poids, de préférence de 90 à 95 % en poids de la masse du mélange liquide polymérisable et **en ce que** le matériau polymère thermoplastique représente de 3 à 20 % en poids, de préférence de 5 à 10 % en poids du mélange liquide polymérisable.

**18.** Mélange liquide polymérisable selon l'une quelconque des revendications 14 à 17, **caractérisé en ce que** la composition thermodurcissable comprend en outre au moins un amorceur de polymérisation, de préférence au moins un photo-amorceur.

**19.** Mélange liquide polymérisable selon l'une quelconque des revendications 14 à 18, **caractérisé en ce que** la masse du ou des amorceurs de polymérisation représente de 0,1 à 10 % de la masse de la composition polymérisable thermodurcissable.

**20.** Mélange liquide polymérisable selon l'une quelconque des revendications 14 à 19, **caractérisé en ce que** le bloc de poly(méthacrylate de méthyle) (PMMA) représente de 50% à 80% en poids, de préférence de 52% à 70% en poids de la masse moléculaire moyenne en poids du copolymère triblocs polystyrène-*bloc*-polybutadiène-*bloc*-poly (méthacrylate de méthyle).

## Claims

**1.** Method for the preparation of a transparent moulding comprising a blend of a thermoset polymeric material forming the matrix of said moulding, and of a thermoplastic polymeric material, dispersed within said thermoset polymeric material, said method comprising at least the following stages:

i) preparation of a liquid polymerizable mixture by dissolving said thermoplastic polymeric material in a thermosetting composition that is a precursor of said matrix,
ii) filling of a mould with the liquid polymerizable mixture prepared in stage i),
iii) polymerization of the liquid polymerizable mixture until a hardened blend of polymers is obtained, and
iv) removal of the moulding formed by said blend of polymers,

said process being **characterized by** the fact that the thermosetting composition comprises at least 60 % by weight, preferably between 70 and 85 % by weight of 4,4'-di(ethoxyethyl)-bisphenol A dimethacrylate of formula (I)

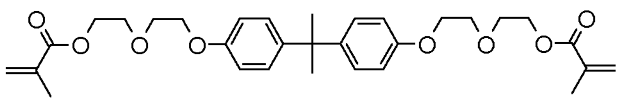

(I)

and at least 12 % by weight, preferably 15 % to 30 % by weight, of at least one monofunctional or multifunctional acrylic comonomer and by the fact that the thermoplastic polymeric material comprises at least one polystyrene-block polybutadiene-block poly(methyl methacrylate) (PS-b-PB-b-PMMA) triblock copolymer.

**2.** Method for the preparation of a transparent moulding according to claim 1, **characterized in that** the acrylic comonomer is a monofunctional acrylic comonomer.

3. Method for the preparation of a transparent moulding according to any one of the preceding claims, **characterized in that** the acrylic comonomer is chosen from methyl methacrylate, hydroxyethyl methacrylate, or a mixture thereof.

4. Method for the preparation of a transparent moulding according to any one of the preceding claims, **characterized in that** the thermosetting composition represents 80 to 97 % by weight, in particular 90 to 95 % by weight of the mass of the polymerizable liquid mixture and **in that** the thermoplastic polymeric material represents 3 to 20 % by weight, preferably 5 to 10 % by weight of the polymerizable liquid mixture.

5. Method for the preparation of a transparent moulding according to any one of the preceding claims, **characterized in that** the thermosetting composition also comprises at least one polymerization initiator, preferably at least one photoinitiator.

6. Method for the preparation of a transparent moulding according to claim 5, **characterized in that** the mass of the polymerization initiator or initiators represents 0.1 to 10 % of the mass of the thermosetting polymerizable composition.

7. Method for the preparation of a transparent moulding according to any one of the preceding claims, **characterized in that** the polymerizable liquid mixture is polymerized by photopolymerization.

8. Method for the preparation of a transparent moulding according to any one of the preceding claims, **characterized in that** the polymerization in stage iii) is carried out at a temperature comprised between 0°C and 100°C, preferably at a temperature comprised between 10 and 30°C, and in particular at a temperature comprised between 20 and 25°C.

9. Method for the preparation of a transparent moulding according to any one of the preceding claims, **characterized in that** the poly(methyl methacrylate) (PMMA) block represents 50% to 80% by weight, preferably 52% to 70% by weight of the weight-average molar mass of the polystyrene-block-polybutadiene-block-poly(methyl methacrylate) triblock copolymer.

10. Method for the preparation of a transparent moulding according to any one of the preceding claims, **characterized in that** the weight-average molar mass of said poly(methyl methacrylate) block is comprised between 10,000 and 100,000 g/mol.

11. Method for the preparation of a transparent moulding according to any one of the preceding claims, **characterized in that** said transparent moulding is an optical article, preferably an ophthalmic lens.

12. Transparent moulding comprising a blend of a thermoset polymer and of a triblock thermoplastic polymer, obtainable by a method according to any one of the preceding claims.

13. Transparent moulding according to claim 12, **characterized by** the fact that it is an ophthalmic lens.

14. Polymerizable liquid mixture comprising a thermoplastic polymeric material dissolved in a thermosetting composition, **characterized by** the fact that the thermosetting composition comprises at least 60 % by weight, preferably between 70 and 85 % by weight of 4,4'-di(ethoxyethoxy)-bisphenol A dimethacrylate of formula (I)

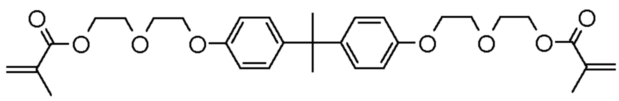

(I)

and at least 12 % by weight, preferably 15 % to 30 % by weight, of at least one monofunctional or multifunctional acrylic comonomer, and by the fact that the thermoplastic polymeric material comprises at least one polystyrene-block polybutadiene-block-poly(methyl methacrylate) (PS-b-PB-b-PMMA) triblock copolymer.

15. Polymerizable liquid mixture according to claim 14, **characterized in that** the acrylic comonomer is a monofunctional acrylic comonomer.

16. Polymerizable liquid mixture according to claim 14 or 15, **characterized in that** the acrylic comonomer is chosen from methyl methacrylate, hydroxyethyl methacrylate, or a mixture thereof.

**17.** Polymerizable liquid mixture according to any one of claims 14 to 16, **characterized in that** the thermosetting composition represents 80 to 97 % by weight, preferably 90 to 95 % by weight of the mass of the polymerizable liquid mixture and **in that** the thermoplastic polymeric material represents 3 to 20 % by weight, preferably 5 to 10 % by weight of the polymerizable liquid mixture.

**18.** Polymerizable liquid mixture according to any one of claims 14 to 17, **characterized in that** the thermosetting composition also comprises at least one polymerization initiator, preferably at least one photoinitiator.

**19.** Polymerizable liquid mixture according to any one of claims 14 to 18, **characterized in that** the mass of the polymerization initiator or initiators represents 0.1 to 10 % of the mass of the thermosetting polymerizable composition.

**20.** Polymerizable liquid mixture according to any one of claims 14 to 19, **characterized in that** the poly(methyl methacrylate) (PMMA) block represents 50% to 80% by weight, preferably 52% to 70% by weight of the weight-average molar mass of the polystyrene-block-polybutadiene-block-poly(methyl methacrylate) triblock copolymer.

## Patentansprüche

**1.** Verfahren zur Herstellung eines transparenten Formgegenstands, der ein Gemisch aus einem wärmegehärteten Polymermaterial, das die Matrix des Gegenstands bildet, und einem thermoplastischen Polymermaterial, das innerhalb des wärmegehärteten Polymermaterials dispergiert ist, umfasst, wobei das Verfahren mindestens die folgenden Schritte umfasst:

i) Herstellen einer flüssigen polymerisierbaren Mischung durch Lösen des thermoplastischen Polymermaterials in einer wärmehärtbaren Vorläuferzusammensetzung der Matrix,
ii) Füllen einer Form mit der flüssigen polymerisierbaren Mischung, die in Schritt i) hergestellt wurde,
iii) Polymerisation der flüssigen polymerisierbaren Mischung bis zum Erhalt eines Gemischs aus gehärteten Polymeren, und
iv) Entformen des Formgegenstands, der aus dem Polymergemisch gebildet wurde,

wobei das Verfahren durch die Tatsache **gekennzeichnet** ist, dass die wärmehärtbare Zusammensetzung mindestens 60 Gew.-%, bevorzugt zwischen 70 und 85 Gew.-% 4,4'-Di(ethoxyethyl)-bisphenol-A-dimethacrylat mit der folgenden Formel (I):

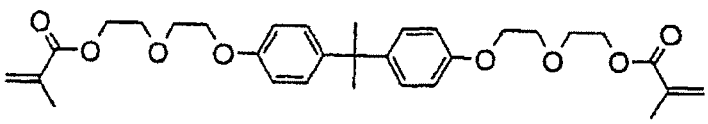

(I)

und mindestens 12 Gew.-%, bevorzugt 15 % bis 30 Gew.-% mindestens eines monofunktionellen oder multifunktionellen Acrylcomonomers umfasst, und durch die Tatsache, dass das thermoplastische Polymermaterial mindestens ein Triblock-Copolymer Polystyrol-block-Polybutadien-block-Poly(methylmethacrylat) (PS-b-PB-b-PMMA) umfasst.

**2.** Verfahren zur Herstellung eines transparenten Formgegenstands nach Anspruch 1, **dadurch gekennzeichnet, dass** das Acrylcomonomer ein monofunktionelles Acrylcomonomer ist.

**3.** Verfahren zur Herstellung eines transparenten Formgegenstands nach einem der vorhergehenden Ansprüche, **dadurch gekennzeichnet, dass** das Acrylcomonomer aus Methylmethacrylat, Hydroxyethylmethacrylat oder aus deren Mischung ausgewählt ist.

**4.** Verfahren zur Herstellung eines transparenten Formgegenstands nach einem der vorhergehenden Ansprüche, **dadurch gekennzeichnet, dass** die wärmehärtbare Zusammensetzung 80 bis 97 Gew.-%, bevorzugt 90 bis 95 Gew.-% der Masse der polymerisierbaren flüssigen Mischung darstellt, und dadurch, dass das thermoplastische Polymermaterial 3 bis 20 Gew.-%, bevorzugt 5 bis 10 Gew.-% der polymerisierbaren flüssigen Mischung darstellt.

5. Verfahren zur Herstellung eines transparenten Formgegenstands nach einem der vorhergehenden Ansprüche, **dadurch gekennzeichnet, dass** die wärmehärtbare Zusammensetzung ferner mindestens einen Polymerisationsinitiator, bevorzugt mindestens einen Photoinitiator umfasst.

6. Verfahren zur Herstellung eines transparenten Formgegenstands nach Anspruch 5, **dadurch gekennzeichnet, dass** die Masse des oder der Polymerisationsinitiatoren 0,1 bis 10 % der Masse der wärmehärtbaren polymerisierbaren Zusammensetzung darstellt.

7. Verfahren zur Herstellung eines transparenten Formgegenstands nach einem der vorhergehenden Ansprüche, **dadurch gekennzeichnet, dass** die polymerisierbare flüssige Mischung durch Photopolymerisation polymerisierbar ist.

8. Verfahren zur Herstellung eines transparenten Formgegenstands nach einem der vorhergehenden Ansprüche, **dadurch gekennzeichnet**, die Polymerisation in Schritt iii) bei einer Temperatur im Bereich zwischen 0°C und 100°C, bevorzugt bei einer Temperatur im Bereich zwischen 10 und 30°C, und insbesondere bei einer Temperatur im Bereich zwischen 20 und 25°C ausgeführt wird.

9. Verfahren zur Herstellung eines transparenten Formgegenstands nach einem der vorhergehenden Ansprüche, **dadurch gekennzeichnet, dass** der Poly(methylmethacrylat)block (PMMA) 50 Gew.-% bis 80 Gew.-%, bevorzugt 52 Gew.-% bis 70 Gew.-% der gewichtsgemittelten Molekülmasse des Triblock-Copolymers Polystyrol-block-Polybutadien-block-Poly(methylmethacrylat) darstellt.

10. Verfahren zur Herstellung eines transparenten Formgegenstands nach einem der vorhergehenden Ansprüche, **dadurch gekennzeichnet, dass** die gewichtsgemittelte Molekülmasse des Poly(methylmethacrylat)blocks im Bereich zwischen 10.000 und 100.000 g/mol liegt.

11. Verfahren zur Herstellung eines transparenten Formgegenstands nach einem der vorhergehenden Ansprüche, **dadurch gekennzeichnet, dass** der transparente Formgegenstand ein optischer Gegenstand, bevorzugt eine ophthalmische Linse ist.

12. Transparenter Formgegenstand, der ein Gemisch aus einem wärmegehärteten Polymer und einem thermoplastischen Triblock-Polymer umfasst, der mit einem Verfahren nach einem der vorhergehenden Ansprüche erhalten werden kann.

13. Transparenter Formgegenstand nach Anspruch 12, **gekennzeichnet durch** die Tatsache, dass es sich um eine ophthalmische Linse handelt.

14. Polymerisierbare flüssige Mischung, die ein thermoplastisches Polymermaterial umfasst, das in einer wärmehärtbaren Zusammensetzung gelöst ist, **gekennzeichnet durch** die Tatsache, dass die wärmehärtbare Zusammensetzung mindestens 60 Gew.-%, bevorzugt zwischen 70 und 85 Gew.-% 4,4'-Di(ethoxyethoxy)-bisphenol-A-dimethacrylat mit der folgenden Formel (I):

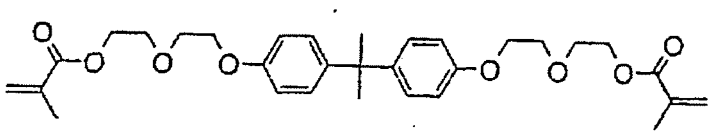

(I)

und mindestens 12 Gew.-%, bevorzugt 15 % bis 30 Gew.-% mindestens eines monofunktionellen oder multifunktionellen Acrylcomonomers umfasst, und **durch** die Tatsache, dass das thermoplastische Polymermaterial mindestens ein Triblock-Copolymer Polystyrol-block-Polybutadien-block-Poly(methylmethacrylate) (PS-b-PB-b-PMMA) umfasst.

15. Polymerisierbare flüssige Mischung nach Anspruch 14, **dadurch gekennzeichnet, dass** das Acrylcomonomer ein monofunktionelles Acrylcomonomer ist.

16. Polymerisierbare flüssige Mischung nach Anspruch 14 oder 15, **dadurch gekennzeichnet, dass** das Acrylcomonomer aus Methylmethacrylat, Hydroxyethylmethacrylat oder aus deren Mischung ausgewählt ist.

**17.** Polymerisierbare flüssige Mischung nach einem der Ansprüche 14 bis 16, **dadurch gekennzeichnet, dass** die wärmehärtbare Zusammensetzung 80 bis 97 Gew.-%, bevorzugt 90 bis 95 Gew.-% der Masse der polymerisierbaren flüssigen Mischung darstellt, und dadurch, dass das thermoplastische Polymermaterial 3 bis 20 Gew.-%, bevorzugt 5 bis 10 Gew.-% der polymerisierbaren flüssigen Mischung darstellt.

**18.** Polymerisierbare flüssige Mischung nach einem der Ansprüche 14 bis 17, **dadurch gekennzeichnet, dass** die wärmehärtbare Zusammensetzung ferner mindestens einen Polymerisationsinitiator, bevorzugt mindestens einen Photoinitiator umfasst.

**19.** Polymerisierbare flüssige Mischung nach einem der Ansprüche 14 bis 18, **dadurch gekennzeichnet, dass** die Masse des oder der Polymerisationsinitiatoren 0,1 bis 10 % der Masse der wärmehärtbaren polymerisierbaren Zusammensetzung darstellt.

**20.** Polymerisierbare flüssige Mischung nach einem der Ansprüche 14 bis 19, **dadurch gekennzeichnet, dass** der Poly(methylmethacrylat)block (PMMA) 50 Gew.-% bis 80 Gew.-%, bevorzugt 52 Gew.-% bis 70 Gew.-% der gewichtsgemittelten Molekülmasse des Triblock-Copolymers Polystyrol-block-Polybutadien-block-Poly(methylmethacrylat) darstellt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1290088 A
- US 5442022 A
- US 5445828 A
- US 5702825 A
- US 5741831 A
- FR 2699541
- WO 2005073314 A
- WO 2005014699 A


### Littérature non-brevet citée dans la description


- **GIRARD-REYDET, E. ; PASCAULT, J. P. ; BONNET, A. ; COURT, F. ; LEIBLER, L.** A new class of Epoxy Thermosets. *Macromol. Symp.,* 2003, vol. 198, 309-322